Europäisches Patentamt

European Patent Office

Office européen des brevets

(19)

(11) Publication number: **0 372 084 B1**

# (12) EUROPEAN PATENT SPECIFICATION

(45) Date of publication of patent specification: **10.08.94**  (51) Int. Cl.⁵: **C04B  41/65**, C04B 41/67

(21) Application number: **89904234.5**

(22) Date of filing: **11.04.89**

(86) International application number:
**PCT/JP89/00388**

(87) International publication number:
**WO 89/10338 (02.11.89 89/26)**

(54) **ASBESTOS-TREATING AGENT AND PROCESS FOR TREATING ASBESTOS.**

(30) Priority: **30.04.88 JP 105441/88**
       **30.04.88 JP 105443/88**
       **31.10.88 JP 273169/88**
       **31.10.88 JP 275368/88**
       **30.11.88 JP 300618/88**

(43) Date of publication of application:
       **13.06.90 Bulletin  90/24**

(45) Publication of the grant of the patent:
       **10.08.94 Bulletin  94/32**

(84) Designated Contracting States:
       **DE FR GB SE**

(56) References cited:
       **CA-A- 1 130 537          JP-B- 53 968**
       **JP-B-57 209 872          US-A- 3 708 014**
       **US-A- 4 477 490          US-A- 4 818 143**

(73) Proprietor: **Solvay Umweltchemie GmbH**
       **Hans-Böcker-Allee 20**
       **D-30173 Hannover (DE)**

(72) Inventor: **KAWASAKI, Hironobu**
       **1338-1-121, Yaehara**
       **Kimitsu-shi**
       **Chiba-ken 299-11 (JP)**
       Inventor: **INAGAKI, Hatsuo**
       **30-2-203, Souri**
       **Kisarazu-shi**
       **Chiba-ken 292 (JP)**
       Inventor: **KIYOMOTO, Yasuo**
       **30-2-402, Souri**
       **Kisarazu-shi**
       **Chiba-ken 292 (JP)**
       Inventor: **YAMAGUCHI, Tanemi**
       **Nippon Steel Corporation**
       **6-3, Otemachi 2-chome**
       **Chiyoda-ku Tokyo 100 (JP)**

**DERWENT JAPANESE PATENTS GAZETTE,**
**Derwent Publications, section Ch: chemical,**
**week K06, accession no. 13229K/06, 22nd -**
**27th December 1982; & JP-A-57 209 872 (S.**
**YOIDA) 23-12-1982**

74  Representative: **Strehl Schübel-Hopf Groening**
     **& Partner**
     **Maximilianstrasse 54**
     **D-80538 München (DE)**

## Description

Field of the Invention

This invention relates to asbestos abatement agents and a method for application thereof, and more particularly to asbestos abatement agents which are applied by coating or spraying to the surface of asbestos-containing structures in buildings such as asbestos-coated walls and ceilings or of asbestos removed as waste from asbestos-containing structures such as sprayed asbestos, asbestos tiles, and asbestos brake linings and allowed to react with asbestos contained therein to modify needle-shaped asbestos into a solid nonhazardous mass and a method for application of said asbestos abatement agents.

Background of the Technology

Asbestos occurs in several varieties such as white asbestos (chrysotile containing $MgO.SiO_2$ as principal component), brown asbestos (amosite, $Fe_2 O_3 .SiO_2$ ), and blue asbestos (crocidolite, $Fe_2 O_3 .SiO_2$ ). White asbestos has been used widely from old days as asbestos while brown asbestos and blue asbestos have found little use, if any. These varieties of asbestos are naturally-occurring inorganic fibers of excellent fire resistance, durability, thermal insulation, and abrasion resistance and have been formulated into boards or into spray materials for fireproof coating and acoustic and thermal insulation in the construction and related industries.

Asbestos, however, has been found to release airborne fiber dusts which create health hazards when inhaled into the human body and the health effects of asbestos have become a social problem.

Sprayed asbestos in buildings, for example, deteriorates with the time and releases airborne fiber dusts creating serious health hazards. In view of such hazard potentials, the Industrial Hygiene Act of Japan was revised, effective as of 1975, to prohibit in principle the spray coating of asbestos. However, the asbestos-containing structures already in existence prior to the effective date of the revision continue to release airborne asbestos dusts and the health hazards to the regular users of such structures or to the workers engaged in demolition of such structures and the environmental pollution in the vicinity of the demolition sites present a serious social problem.

One method of preventing the scattering of such asbestos dusts is to contain them by a suitable solidifying agent (Japan Kokai Tokkyo koho No. 167370-1987 and U.S. Patent No. 4,477,490). However, in the cases where an existing asbestos coating is to be contained without demolition, the solidifying agent, if organic in nature, forms a film which is problematical in respect to fire resistance and long-term durability. With the use of organic solidifying agents, it is neither possible to make good use of the characteristics of asbestos nor possible to modify asbestos itself into a nonhazardous substance. The problem of health hazards will recur at the time of demolition of those asbestos structures which are contained with organic solidifying agents.

An inorganic coating composition for asbestos is disclosed in JP-A-57-20 98 72. This composition is produced by adding zinc oxide and white Portland cement to water glass containing a small amount of phosphoric acid. Due to the composition of Portland cement, which usually comprises 60 to 96% CaO, 18 to 24% $SiO_2$, 4 to 8% $Al_2O_3 + TiO_2$ and smaller amounts of $Fe_2O_3$, MgO, $K_2O$ and $Na_2O$, this material is highly alkaline.

Another method is to remove asbestos from the existing structures and dispose it as waste and attempts have been made to remove asbestos-containing materials from buildings, pack them in bags or seal them in concrete as waste, and bury them in the ground. This method of disposal, however, cannot completely eliminate the possibility of asbestos wastes in bags and concrete reappering on the surface by chance, for example in an earthquake, and becoming airborne fiber dusts to cause environmental pollution and health hazards. For this reason, some municipal corporations have prohibited the disposal of asbestos by this method. Therefore, it has become an important theme to devise a method for turning asbestos wastes into nonhazardous materials.

Accordingly, there has arisen a need for development of inorganic abatement agents which modify asbestos into a nonhazardous substance while keeping intact such characteristics as fire resistance and durability inherent in asbestos itself.

Asbestos has been considered a substance of extremely high chemical stability, being sparingly soluble in common acids with the exception of hydrofluoric acid, and hence a substance exceedingly resistant to chemical modification. This has been responsible for complete lack of attempts to modify asbestos itself into a nonhazardous substance. What has been accomplished to date is not much more than to contain asbestos dusts and this has not provided a fundamental solution to the aforesaid problems.

Noting the fact that asbestos is a basic substance, the present inventors conducted extensive studies to modify asbestos itself into a nonhazardous substance by utilizing the chemical reaction of the basic components such as MgO and $Fe_2O_3$ contained therein and also the chemical and physical destruction of $SiO_2$ and its compounds with MgO and /or $Fe_2O_3$ considered as covering the surface of asbestos and arrived at this invention.

An object of this invention, therefore, is to provide asbestos abatement agents which chemically modify asbestos itself into a nonhazardous substance.

Another object of this invention is to provide a method for chemically modifying asbestos into a nonhazardous substance with the use of said asbestos abatement agents.

A further object of this invention is to provide asbestos abatement agents which modify asbestos-containing structures such as walls and ceilings in buildings as they are without damaging their meritorious properties and turn them nonhazardous to enable continued use of the buildings and to provide a method for application of said asbestos abatement agents.

Disclosure of the Invention

This invention relates to an asbestos abatement agent, comprising

0.5 to 50 wt.-% of one or more mineral acids containing one or more elements selected from phosphorus, sulphur, nitrogen and halogen, and

0.5 to 20 wt.-% as solids, of one or more inorganic polymers containing one more more Si-O, Ti-O and/or Al-O linkages, in the form of an aqueous solution or dispersion, and having a pH value of 3.5 or less.

The present invention further relates to a method of treating asbestos, which comprises applying the above-defined asbestos abatement agent to the surface of asbestos-containing structures or asbestos wastes by coating or spraying, and allowing the treating agent to react with the asbestos to form a solid mass.

The mineral acids containing one or more elements of phosphorus, sulfur, nitrogen, and halogens to be used in this invention denote those substances which contain any one of such elements and exhibit the properties of acids when dissolved in water. Examples of phosphorus-containing acids are phosphoric acids and aqueous solutions of acid phosphates, those of sulfur-containing acids are sulfuric acid, sulfuric anhydride, fuming sulfuric acid, persulfuric acid, and sulfurous acid, those of nitrogen-containing acids are nitric acid, fuming nitric acid, and nitrous acid, and those of halogen-containing acids are hydrofluoric acid, hydrochloric acid, hydrobromic acid, hydroiodic acid, perfluoric acid, perchloric acid, perbromic acid, and periodic acid. It is possible to use any one or a mixture of two or more of these acids and, if required, along with their ammonium salts or metal salts such as calcium, magnesium, barium, zinc, manganese, and aluminum.

The phosphoric acids to be used in this invention include phosphoric acid, metaphosphoric acid, pyrophosphoric acid, and polyphosphoric acids and they ionize in water as follows:

$$H_3PO_4 \rightleftharpoons 3H^+ + PO_4{}^{3-} \qquad (1)$$

Preferred examples of the aqueous solutions of acid phosphates are those metal dihydrogenphosphates which dissolve in water dissociating into phosphoric acid and metal phosphate with the phosphoric acid further ionizing as in equation (1) above:

$$3Me(H_2PO_4)_n \rightleftharpoons Me_3(PO_4)_n + 2nH_3PO_4 \qquad (2)$$

where Me is a metal and n is an integer of 2 or 3. The metal in the dihydrogenphosphates may be calcium, magnesium, barium, zinc, manganese, and aluminum as mentioned above and the salts may be used singly or mixed.

In the cases where the asbestos to be treated is chrysotile (white asbestos), any of the acids or acid mixtures mentioned above may be used satisfactorily since chrysotile contains $MgO.SiO_2$ as main component and shows a relatively high basicity. The situation changes, however , if the asbestos is other than chrysotile. Amosite (brown asbestos) or crocidolite (blue asbestos) containing $SiO_2.Fe_2O_3$ as main component is weakly basic and its modification is sometimes retarded considerably by the slow reaction of this component with the acids. In such cases, it helps to replace the whole or a part of the acid or acid mixture with a water-soluble fluorine-containing acid. Examples of such acid include hydrofluoric acid, perfluoric acid, fluorosilicic acid, hexafluorotitanic acid, their ammonium salts, and their metal salts such as sodium, potassium,strontium, and rubidium, used either singly or mixed.

4

The amount of the aforesaid acids or acid mixtures to be used is 0.5 to 50% by weight as solid, preferably 10 to 30% by weight, of the aqueous solutions or dispersions of the abatement agents. At 0.5% by weight or less, the acids are less reactive with the basic films covering asbestos and are hence less effective for solidifying the asbestos. On the other hand, at 50% by weight or more, the aqueous solutions or dispersions of the abatement agents become unstable and react with the basic films locally and not uniformly, yielding products of lower strength. With the water-soluble fluorine-containing acids, the amount to be used is 0.5 to 20% by weight, preferably 1 to 10% by weight, of the aqueous solutions or dispersions of the abatement agents. The fluorine-containing acids may not be reactive enough to dissolve weakly basic asbestos at 0.5% by weight or less while water-insoluble fluorides may undesirably remain after the reaction at 20% by weight or more.

In accordance with this invention, water-soluble or water-dispersible inorganic polymers are used in addition to the aforesaid acids or acid mixtures. Such water-based inorganic polymers are aqueous solutions or dispersions of polymers containing one or more of Si-O, Ti-O, and Al-O linkages. Water glass, aqueous solutions of partial hydrolyzates of alkyl silicates, colloidal silica, aqueous solutions of alkyl titanates, titania sols, or alumina sols may be used as such aqueous solutions or dispersions. Any one of them may be used singly or two or more of them may be used in mixture. They are either dissolved or dispersed as colloids in water and are capable of forming films by themselves on drying.

The amount of said water-based inorganic polymers is 0.5 to 20% by weight as solid, preferably 1 to 10%, of the aqueous solutions or dispersions of the abatement agents. The polymers form films of insufficient strength on solidification at less than 0.5% by weight while they sometimes gel and precipitate in the aqueous solutions or dispersions at more than 20% by weight.

Furthermore, the asbestos abatement agents of this invention may be improved in flexibility of film and adhesion to asbestos by addition of a suitable amount of water-soluble or water-dispersible organic polymers such as poly(acrylic acid), polyacrylamide, acrylic emulsions, partial hydrolyzates of poly( vinyl butyral), and poly(vinyl alcohol) or in penetration into asbestos by addition of surfactants which are stable in acidic solutions, for example, sodium dodecylbenzenesulfonate.

The pH of the treating agents of this invention is controlled at 3.5 or less, preferably 0.5 to 3.0, or more preferably 1.5 to 3.0. At a pH of 0.5 or less, some of the water-based inorganic polymers cease to exist stably or phosphoric acid and/or an aqueous solution of an acid phosphate used as acid or acid mixture may be kept dissolved in water but an excess of the acid may remain unsolidified after completion of the reaction with asbestos. On the other hand, some of the phosphates formed may precipitate out of the solution at a pH of 3.5 or more when an aqueous solution of an acid phosphate is used as acid or acid mixture.

In the preparation of the asbestos abatement agents of this invention, an aqueous solution or dispersion of the water-based inorganic polymers is added to an aqueous solution of the acid or acid mixture with stirring. Sufficient stirring is required here to prevent gelation. The pH of the abatement agents, if necessary, can be controlled with the hydroxide or carbonate of ammonium or of metals such as sodium, potassium, strontium, and rubidium.

In the application of the abatement agents of this invention to asbestos, the surface of asbestos-containing structures or asbestos wastes is sprayed or coated with the abatement agents. If such structures have a thick layer of asbestos, the penetration of the abatement agents into the inside of the layer can be facilitated by wetting the surface of the asbestos with water or an aqueous dilution of the abatement agents in advance. Moreover, the agents may be applied to the asbestos while agitating and/or grinding the asbestos if necessary. In order to enhance the reactivity of the abatement agents with asbestos, it is sometimes beneficial to heat the abatement agents and/or the asbestos to a suitable temperature. In the cases where asbestos-containing structures are so damaged as to begin falling off at any time or be in need of demolition, it is desirable from the viewpoint of prevention of the scattering of asbestos dusts to apply the aforesaid abatement agents to the structures by coating or spraying and modify needle-shaped asbestos into a solid mass prior to stripping or demolition.

Any excess of the acid remaining after completion of the reaction of the abatement agents of this invention with asbestos may be neutralized with lime or the like. The reaction products with asbestos are often soluble in water when acids containing nitrogen or halogens are used. Such neutralization products and water-soluble reaction products may be contained in the water-insoluble films which will form on drying from water-soluble or water-dispersible organic polymers such as polyacrylamide, partial hydrolyzates of poly(vinyl butyral), and acrylic emulsions added beforehand in suitable amounts to the abatement agents.

Furthermore, the abatement agents of this invention are applicable to the cases where an asbestos-containing structure is not disposed as waste but repaired or contained as is by forming an overcoat on the surface. In such cases, the abatement agents can be applied by spraying or coating to modify asbestos into a solid mass.

Needle-shaped fibrous asbestos, when treated with the abatement agents of this invention, dissolves and turns into a solid mass. This phenomenon may be explained as follows.

Chrysotile, in spite of its being composed mainly of MgO. $SiO_2$ and hence basic, does not readily dissolve in common acids and this is probably due to the presence of $SiO_2$ that is not readily soluble in common acids on the surface. When chrysotile is treated with the agents of this invention consisting of aqueous solutions or dispersions of the aforedsaid acids or acid mixtures and the water-based inorganic polymers, the inorganic polymers solidify into films on the surface of the asbestos, thereby generating a shrinkage stress. The shrinkage stress causes minute cracks in the aforesaid acid-insoluble $SiO_2$ films and creates active sites; the acid or the acid mixture enters through such active sites and reacts with basic MgO. $SiO_2$ present inside to form magnesium salts.

It is here desirable for the reaction products to be water-insoluble solids. With the use of the aqueous solutions of the aforesaid acid phosphates, $H_3 PO_4$ formed by dissociation reacts with MgO in chrysotile to form magnesium phosphate, thus consuming phosphoric acid and separating water-insoluble metal phosphates $Me_3 ( PO_4 )_n$ while keeping the concentration of phosphoric acid under good control. From this point of view, magnesium and aluminum dihydrogenphosphates are particularly useful since they form solutions of fairly high molecular weight and solidify into firm water-insoluble films. Although there are a wide variety of metal dihydrogenphosphates besides the aforesaid two, they are not expected to be as effective as the two because some are either sparingly soluble or insoluble in water while others such as those of sodium, potassium, lithium, strontium, and ammonium are soluble in water but so are the phosphates resulting from them in the reaction.

On the other hand, other varieties of asbestos such as amosite (brown asbestos) and crocidolite (blue asbestos) contain $SiO_2 . Fe_2 O_3$ as main component and, on account of their low basicity, they sometimes do not react readily with aqueous solutions of the acids or acid mixture and the water-based inorganic polymers. In such a case, a part or the whole of the acids or acid mixtures is replaced with a water-soluble fluorine-containing acid. What is considered to happen here is that the fluorine-containig acid dissolves $SiO_2$ or $SiO_2 . Fe_2 O_3$ present in the surface layer of asbestos fibers, the acid and/or other acids then react with MgO or $Fe_2 O_3$ to dissolve needle-shaped asbestos and turn it into a solid mass. The fluorine in the acid used here reacts with calcium and magnesium and becomes fixed as water -insoluble calcium fluoride and magnesium fluoride.

Brief Description of the Drawings

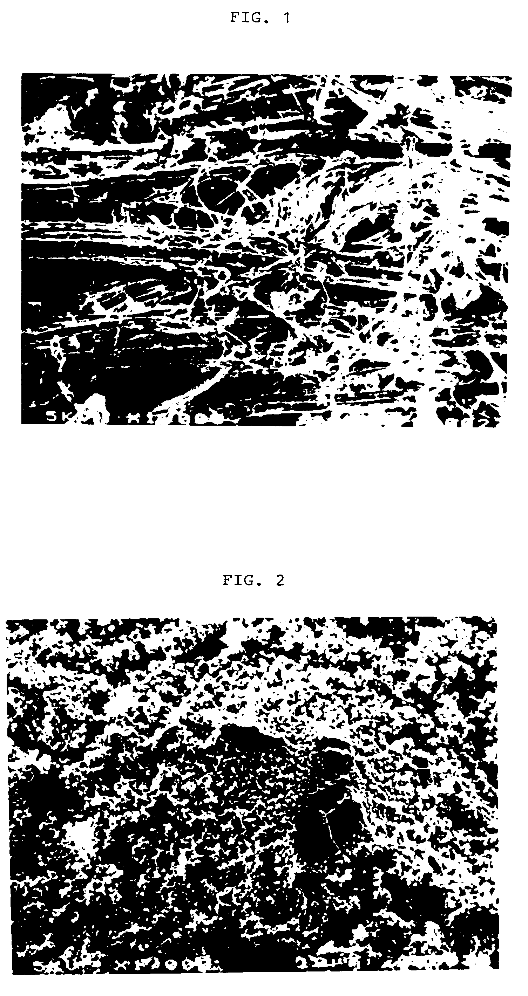

Figs. 1 to 8 are photomicrographs of the textures on the surface of asbestos-sprayed boards before and after the application of the abatement agents of this invention. Figs. 1, 3, 5, and 7 are related to the conditions before the application and Figs. 2, 4, 6, and 8 to those after the application.

Detailed Description of the Preferred Embodiment

This invention is explained in detail with reference to the accompanying examples and comparative examples.

Examples 1 and 2 and Comparative Examples 1 and 2

The asbestos abatement agents of the compositions shown in Table 1 were prepared for Examples 1 and 2 and Comparative Examples 1 and 2.

An aqueous slurry of a mixture of 60% by weight of white asbestos (chrysotile type) and 40% by weight of cement was applied by a spray gun to a colored steel plate to a thickness of *2cm* for use as a test asbestos-sprayed plate.

Each of the abatement agents shown in Table 1 was sprayed on the test plate to a thickness of about 500 $\mu m$ on dry basis, allowed to harden at ambient temperature for 2 days, then immersed in water for 2 months, and observed for the conditions of the surface. The results are shown in Table 1.

As is apparent from Table 1, the abatement agents of Examples 1 and 2 formed solid films whereas those of Comparative Examples 1 and 2 formed films which were not solidified enough to resist the attack of water.

Figs. 1 and 2 show the photomicrographs of the textures on the surface of the test plates before and after the application of the abatement agents of this invention. As is apparent from the figures, the needle-shaped asbestos crystals in Fig. 1 are completely absent after the treatment as shown in Fig. 2, indicating an effective modification into a solid mass.

Table 1

| Example 1 |
| --- |
| [Solid concentration in the abatement agent] |
|    Phosphoric acid.......15% by weight |
|    Silica sol............5% by weight |
| [Condition of the film] |
|    Solidified by the reaction, not eroded by water |
| Example 2 |
| [Solid concentration in the abatement agent] |
|    Magnesium dihydrogenphosphate.....20% by weight |
|    Titania sol.....................5% by weight |
| [Condition of the film] |
|    Solidified by the reaction, not eroded by water |
| Comparative Example 1 |
| [Solid concentration in the abatement agent] |
|    Phosphoric acid.......5% by weight |
| [Condition of the film] |
|    Phosphates formed, but eroded by water |
| Comparative Example 2 |
| [Solid concentration in the abatement agent] |
|    Water glass No. 3.................15% by weight |
| [Condition of the film] |
|    Not sufficiently solidified with needle crystals |
|    remaining unchanged, eroded by water |

### Example 3

The following abatement agent was prepared for this example.

| Composition of the abatement agent (% by weight as solid) | |
|---|---|
| Magnesium acid phosphate | 15% {as $Mg(H_2PO_4)_2$} |
| Partial hydrolyzates of ethyl silicate | 10% (as $SiO_2$) |
| Sodium fluorosilicate | 3% |
| Hydrofluoric acid | 2% |

As a test asbestos-sprayed plate, a mixture of 10% by weight of blue asbestos (crocidolite type), 50% by weight of brown asbestos (amosite type), and 40% by weight of cement was mixed with water and applied by a spray gun to a colored steel plate to a thickness of 2 *cm*.

The abatement agent was sprayed on the test plate at a rate of 1.2 g/$cm^2$ to ensure good penetration and left at ambient temperature for 7 days, in which time the formation of a solid mass was observed.

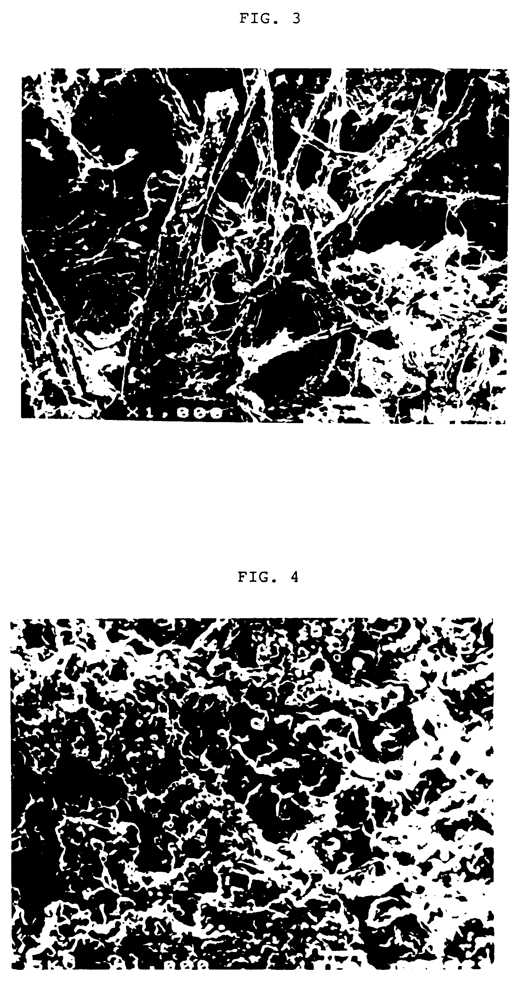

Figs. 3 and 4 show the photomicrographs of the texture on the surface of the test plates before and after the application of the abatement agents. The occurrence of the modification of needle-shaped asbestos crystals into a solid mass was proved here as in Figs. 1 and 2.

### Example 4

A colored iron plate spray-coated with white asbestos (chrysotile type) to a thickness of 2 *mm* was used as a test Plate.

An abatement agent of the following composition was sprayed on the test plate at a rate of 500g/$m^2$, left for 2 days, and observed for the surface condition.

| Composition of the abatement agent (% by weight as solid) | |
|---|---|
| Calcium dihydrogenphosphate | 10% |
| Magnesium dihydrogenphosphate | 10% |
| Silica sol (as $SiO_2$) | 10% |

The film formed was composed of calcium phosphate, magnesium phosphate, silica, and very small quantities of iron oxide and calcium oxide and was solidified firmly.

It is thus apparent that the treatment of this inventiuon modified needle-shaped asbestos into a solid mass in a nonhazardous condition as the aforesaid composition indicated.

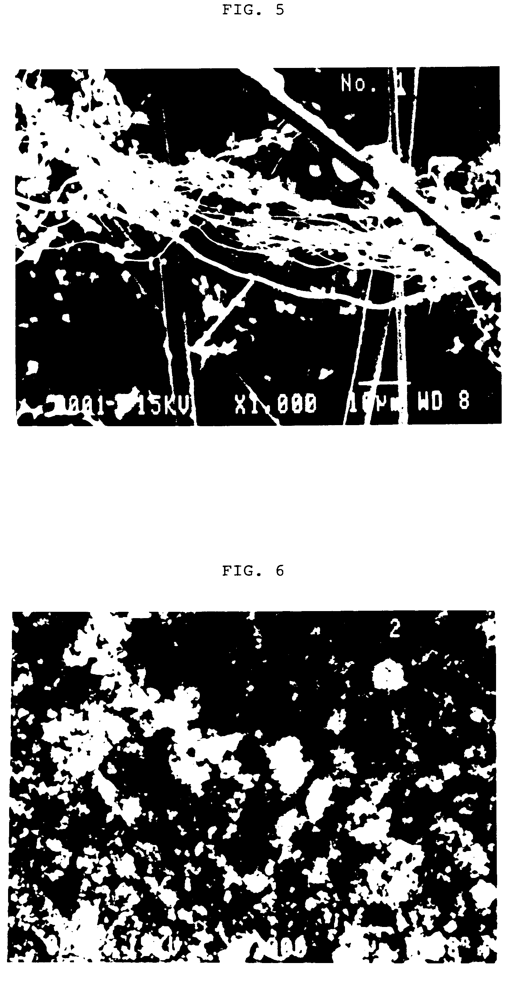

Figs. 5 and 6 show the photomicrographs of the surface of the test plates before and after the treatment of this invention. The occurrence of the modification of needle-shaped asbestos crystals into a solid mass was apparent here as in Figs. 1 and 2 above.

### Example 5

A H-shaped steel beam spray-coated with brown asbestos (amosite type) to a thickness of 20 *mm* was used as test specimen.

An abatement agent of the following composition was applied by spraying to the test specimen at a rate of 5 *Kg*/$m^2$, left for 10 days, and submitted to observation and analysis.

| Composition of the abatement agent (% by weight as solid) | |
|---|---|
| Aluminum dihydrogenphosphate | 20% |
| Silica sol (as $SiO_2$) | 10% |
| Sodium silicofluoride | 5% |
| Hydrofluoric acid | 2% |

The resulting film contained aluminum phosphate, calcium phosphate, iron phosphate, silica, calcium fluoride, and very small quantities of iron oxide and calcium oxide and was firmly solidified.

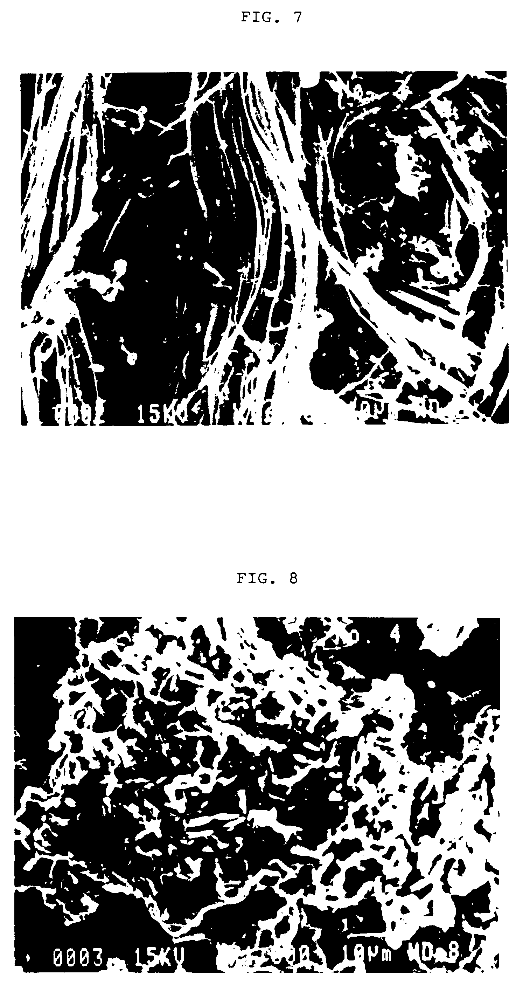

Figs. 7 and 8 show the photomicrographs of the test specimen before and after the application of the abatement agent. The modification of needle-shaped asbestos crystals into a solid mass was evident as in Figs. 1 and 2 above.

Example 6

A waste spray material containing 40% by weight of white asbestos (chrysotile type) and 60% by weight of cement was used as test waste asbestos.

An abatement agent of the following composition (% by weight as solid) was prepared:

| Sulfuric acid | 15% |
| Ammonium persulfate | 5% |
| Silica sol (as $SiO_2$ ) | 10% |

The test asbestos waste was mixed with 80% of its weight of the abatement agent, the mixture was heated at 80 °C for 1 hour with stirring, and allowed to dry and solidify.

The analysis of the solidified mass by X-ray diffractometry detected no chrysotile but magnesium sulfate, silica, and very small quantities of calcium sulfate and iron sulfate, with the needle-shaped fibers converted into a solid mass.

The treatment thus modified the needle-shaped asbestos fibers into a solid mass of a nonhazardous composition as indicated above.

Example 7

A waste spray material containing 40% by weight of brown asbestos (amosite type) and 60% by weight of cement was used as test waste asbestos.

An abatement agent of the following composition (% by weight as solid) was prepared:

| Hydrofluoric acid | 15% |
| Nitric acid | 5% |
| Partial hydrolyzates of ethyl silicate (as $SiO2$ ) | 5% |

The test waste asbestos was mixed with 70% of its weight of the abatement agent and the mixture was heated at 70 °C for 1 hour with stirring and allowed to dry and solidify.

After completion of the solidification, the waste was mixed with 10% of its weight of lime for neutralization of the excess acid and 20% of its weight of a 5% by weight aqueous acrylic emulsion with stirring, dried, and solidified. Thus, the waste was modified into a substance sparingly soluble in water, with the fluorides converted to calcium fluoride and the nitrates contained in the acrylic emulsion.

The material after the treatment was a solid mass, which showed no peak for amosite but those for calcium sulfate, calcium oxide, calcium fluoride, iron nitrate, iron fluoride, and silica by X-ray diffractometry.

Industrial Applicability

The asbestos abatement agents of this invention are mainly composed of one acid or a mixture of two or more acids selected from a group of mineral acids containing one or more elements of phosphorus, sulfur, nitrogen, and halogens and are applied to the surface of asbestos-containing structures and asbestos waste by coating or spraying to convert asbestos itself, unlike the prior art methods, into a nonhazardous substance without damaging the characteristic properties of asbestos such as fireproofing and durability, thus permitting easy disposal of fibrous asbestos which would otherwise become airborne dusts responsible for air pollution and health hazards and contributing to industrial utilization of the asbestos.

**Claims**

1. Asbestos abatement agent, comprising
   0.5 to 50 wt.-% of one or more mineral acids containing one or more elements selected from phosphorus, sulphur, nitrogen and halogen, and

0.5 to 20 wt.-% as solids, of one or more inorganic polymers containing one or more Si-O, Ti-O and/or Al-O linkages, in the form of an aqueous solution or dispersion, and having a pH value of 3.5 or less.

2. Asbestos abatement agent according to claim 1, wherein the inorganic polymer is selected from water glass, an aqueous solution of partial hydrolysates of alkyl silicates, colloidal silica, an aqueous solution of alkyl titanates, titania sol or alumina sol.

3. Asbestos abatement agent according to claim 1 or 2, wherein the one or more mineral acids are present in an amount of 10 to 30 wt.-% of the aqueous solution or dispersion of the abatement agent.

4. Asbestos abatement agent according to any of the claims 1 to 3, wherein the acid is phosphoric acid and/or an aqueous solution of an acid phosphate salt.

5. Asbestos abatement agent according to any of the claims 1 to 4, wherein the acid is a mixture of phosphoric acid and/or an aqueous solution of an acid phosphate salt and one or more acids or salts selected from hydrofluoric acid, hydrosilicofluoric acid, hexafluorotitanic acid, and their alkali salts.

6. Asbestos abatement agent according to any of the claims 1 to 3, wherein the acid or the mixture of acids is one acid or a mixture of two or more acids selected from sulfuric acid, sulfuric anhydride, fuming sulfuric acid, persulfuric acid, sulfurous acid, nitric acid, fuming nitric acid, nitrous acid, hydrofluoric acid, hydrochloric acid, hydrobromic acid, hydroiodic acid, perfluoric acid, perchloric acid, perbromic acid, and periodic acid.

7. A method of treating asbestos which comprises applying an asbestos abatement agent according to any of the claims 1 to 6 to the surface of asbestos containing structures or asbestos wastes by coating or spraying and allowing the treating agent to react with the asbestos to form a solid mass.

**Patentansprüche**

1. Mittel zum Unschädlichmachen von Asbest, welches
   0,5 bis 50 Gew.-% einer oder mehrerer Mineralsäuren, welche ein oder mehr Elemente, ausgewählt unter Phosphor, Schwefel, Stickstoff und Halogen enthalten, und
   0,5 bis 20 Gew-%, als Feststoffe, ein oder mehrere anorganische Polymere, die eine oder mehr Si-O-, Ti-O- und/oder Al-O-Bindungen aufweisen, in Form einer wäßrigen Lösung oder Dispersion enthält und das einen pH-Wert von 3,5 oder weniger hat.

2. Mittel zum Unschädlichmachen von Asbest nach Anspruch 1, wobei das anorganische Polymer unter Wasserglas, einer wäßrigen Lösung von partiellen Hydrolysaten von Alkylsilicaten, kolloidaler Kieselsäure, einer wäßrigen Lösung von Alkyltitanaten, Titandioxidsol oder Aluminiumoxidsol ausgewählt ist.

3. Mittel zu Unschädlichmachen von Asbest nach Anspruch 1 oder 2, worin die eine oder mehrere Mineralsäure(n) in einer Menge von 10 bis 30 Gew.-% der wäßrigen Lösung oder Dispersion des Mittels zum Unschädlichmachen vorhanden sind.

4. Mittel zum Unschädlichmachen von Asbest nach einem der Ansprüche 1 bis 3, wobei die Säure Phosphorsäure und/oder eine wäßrige Lösung eines sauren Phosphorsäuresalzes ist.

5. Mittel zum Unschädlichmachen von Asbest nach einem der Ansprüche 1 bis 4, wobei die Säure ein Gemisch aus Phosphorsäure und/oder einer wäßrigen Lösung eines sauren Phosphorsäuresalzes und einer oder mehrerer Säuren oder Salze ist, die unter Fluorwasserstoffsäure, Silicofluorwasserstoffsäure, Hexafluortitansäure und deren Alkalisalzen ausgewählt ist bzw. sind.

6. Mittel zum Unschädlichmachen von Asbest nach einem der Ansprüche 1 bis 3, wobei die Säure oder das Gemisch von Säuren eine Säure oder ein Gemisch aus zwei oder mehr Säuren ist, die ausgewählt ist unter Schwefelsäure, Schwefelsäureanhydrid, rauchender Schwefelsäure, Perschwefelsäure, schwefliger Säure, Salpetersäure, rauchender Salpetersäure, salpetriger Säure, Fluorwasserstoffsäure, Chlorwasserstoffsäure, Bromwasserstoffsäure, Iodwasserstoffsäure, Perfluorsäure, Perchlorsäure, Perbromsäure und Periodsäure.

7. Verfahren zum Behandeln von Asbest, das darin besteht, daß ein Mittel zum Unschädlichmachen von Asbest nach einem der Ansprüche 1 bis 6 auf die Oberfläche von Asbest enthaltenden Strukturen oder Asbest-Abfällen durch Beschichten oder Aufsprühen aufgebracht wird und das Behandlungsmittel mit dem Asbest unter Bildung einer festen Masse zur Reaktion gebracht wird.

**Revendications**

1. Agent de traitement d'amiante, comprenant
   0,5 à 50 % en poids d'un ou plusieurs acides minéraux contenant un ou plusieurs éléments choisis parmi le phosphore, le soufre, l'azote et un halogène, et
   0,5 à 20 % en poids, en matière sèche, d'un ou plusieurs polymères inorganiques contenant un ou plusieurs chaînons de liaison Si-O, Ti-O et/ou Al-O, sous la forme d'une solution ou dispersion aqueuse, et ayant un pH de 3,5 ou moins.

2. Agent de traitement d'amiante selon la revendication 1, dans lequel le polymère inorganique est choisi parmi le verre soluble, une solution aqueuse d'hydrolysats partiels de silicates d'alkyle, la silice colloïdale, une solution aqueuse de titanates d'alkyle, un sol d'oxyde de titane ou un sol d'alumine.

3. Agent de traitement d'amiante selon l'une quelconque des revendications 1 ou 2, dans lequel l'acide ou les acides minéral(aux) est(sont) présent(s) en une quantité représentant de 10 à 30 % en poids de la solution ou dispersion aqueuse de l'agent de traitement.

4. Agent de traitement d'amiante selon l'une quelconque des revendications 1 à 3, dans lequel l'acide est l'acide phosphorique et/ou une solution aqueuse d'un phosphate acide.

5. Agent de traitement d'amiante selon l'une quelconque des revendications 1 à 4, dans lequel l'acide est un mélange d'acide phosphorique et/ou d'une solution aqueuse d'un phosphate acide et d'un ou plusieurs acides ou sels choisis parmi l'acide fluorhydrique, l'acide silicofluorhydrique, l'acide hexafluorotitanique et leurs sels alcalins.

6. Agent de traitement d'amiante selon l'une quelconque des revendications 1 à 3, dans lequel l'acide ou le mélange d'acides est un acide ou un mélange de deux acides ou plus, choisi(s) parmi l'acide sulfurique, l'anhydride sulfurique, l'acide sulfurique fumant, l'acide persulfurique, l'acide sulfureux, l'acide nitrique, l'acide nitrique fumant, l'acide nitreux, l'acide fluorhydrique, l'acide chlorhydrique, l'acide bromhydrique, l'acide iodhydrique, l'acide perfluorique, l'acide perchlorique, l'acide perbromique et l'acide periodique.

7. Procédé de traitement d'amiante, comprenant l'application d'un agent de traitement d'amiante selon l'une quelconque des revendications 1 à 6, par enduction ou pulvérisation, sur la surface de déchets d'amiante ou de structures contenant de l'amiante, et la réaction de l'agent de traitement avec l'amiante pour la formation d'une masse solide.

FIG. 1

FIG. 2

FIG. 3

FIG. 4

FIG. 5

FIG. 6

FIG. 7

FIG. 8